# FASCICULE DE BREVET EUROPEEN

(11) **EP 1 210 524 B1**
(45) Date de publication et mention de la délivrance du brevet: **14.01.2004**
(21) Numéro de dépôt: 00962591.4
(22) Date de dépôt: 08.09.2000
(51) Int. Cl.: F16C 33/30, F16C 33/32, F16C 33/38, F16C 19/16, F16C 33/78

(54) **ROULEMENT A BILLES HYBRIDE A BILLES CERAMIQUE ET BAGUES EN ACIER**
HYBRIDES KUGELLAGER MIT AUS KERAMISCHEN WERKSTOFF KUGELN UND AUS STAHL LAUFRINGEN HERGESTELLT
HYBRID BALL BEARING COMPRISING CERAMIC BALLS AND STEEL RINGS

(30) Priorité: 10.09.1999 FR 9911360
(43) Date de publication de la demande: 05.06.2002
(73) Titulaire: SNFA, 94200 Ivry sur Seine (FR)
(72) Inventeur: BIDET, Alain, Jean, F-59990 Maresches (FR); CAHEZ, Jean-Pierre, André, F-92320 Châtillon (FR)
(74) Mandataire: Bérogin, Francis
(86) Numéro de dépôt international: PCT/FR2000/002490
(87) Numéro de publication internationale: WO 2001/020181

(56) Documents cités:
- EP-A- 0 600 559
- EP-A- 0 861 991
- EP-A- 0 926 368
- DE-A- 19 726 825
- US-A- 3 899 226
- US-A- 4 634 300
- US-A- 5 044 783
- US-A- 5 388 918

## Description

L'invention concerne un roulement à billes, du type à gorges profondes, comprenant une bague intérieure et une bague extérieure qui sont en acier et présentent chacune l'une respectivement de deux gorges de roulement en regard l'une de l'autre, des billes frittées en céramique, et disposées entre et en contact avec les gorges de roulement des bagues, une cage à billes disposée entre les bagues et retenant les billes, et deux joints d'étanchéité annulaires s'étendant sensiblement radialement entre les deux bagues, de part et d'autre des billes et de la cage, pour retenir un lubrifiant dans le volume contenant les billes et la cage et délimité entre les deux bagues et les deux joints d'étanchéité.

Un tel roulement à billes est connu du document EP0 926 368 A.

L'invention concerne plus particulièrement un roulement à billes tel que présenté ci-dessus, de grande précision, par exemple de niveau ABEC 7, et en particulier de qualité aéronautique.

On utilise déjà en aéronautique, notamment sur les transmissions arrières pour hélicoptères, des roulements à billes du type présenté ci-dessus, et dont les billes en acier, retenues latéralement par une cage pouvant être en acier ou en matériaux composites, roulent contre les gorges de roulements des bagues également en acier.

Ces roulements à billes connus ont pour principal inconvénient de présenter une durée de vie entre graissages qui est trop limitée. Ceci est dû au mauvais comportement aux effets tribologiques qui résulte des contacts des billes en acier contre les bagues également en acier. il en résulte un échauffement important, et donc une dégradation consécutive des graisses et huiles de lubrification.

Les durées de vie entre graissages sont donc limitées, d'une part, en raison d'une perte naturelle du lubrifiant résultant de l'échauffement du roulement en fonctionnement, et provoquant un suintement du lubrifiant échauffé au niveau des joints d'étanchéité annulaires. D'autre part, la limitation de la durée de vie résulte de l'utilisation de ces roulements à billes connus dans un environnement hostile, en milieu extérieur ou en dehors de la protection d'un carter, et du fait d'une maintenance impliquant le nettoyage de parties environnantes du roulement, notamment sur les transmissions arrières d'hélicoptères, ces opérations de nettoyage dans le cadre d'une maintenance pouvant entraîner des pertes de lubrifiant à l'origine d'une oxydation rapide des roulements.

Le problème à la base de l'invention est de remédier à ces inconvénients, et de réaliser un roulement à billes du type présenté ci-dessus, permettant d'allonger les durées de vie entre graissages, ainsi que d'améliorer l'étanchéité dans le temps, et donc de réduire d'autant les coûts de maintenance.

A cet effet, le roulement à billes selon l'invention, du type présenté ci-dessus, se caractérise, lorsque l'acier des bagues n'est pas inoxydable, en ce que l'une au moins des bagues, mais de préférence chacune d'elles, est protégée, notamment contre la corrosion, par un revêtement de surface en un alliage dense à forte teneur en chrome réalisé par dépôt électrolytique. Toutefois, si l'acier des bagues est inoxydable, et qu'une cémentation a été pratiquée sur les gorges de roulement des bagues pour augmenter la dureté, l'inoxydabilité ainsi perdue aux niveaux des gorges de roulement est compensée par un tel revêtement de surface en alliage à base de chrome par dépôt électrolytique sur les gorges de roulement. Le roulement à billes selon l'invention est ainsi avantageusement un roulement à billes hybride, du type à gorges profondes, dont le comportement aux effets tribologiques est amélioré aux contacts entre les billes et les bagues par le couple de matériaux entrant en contact et utilisés pour réaliser les bagues et les billes, à savoir l'acier pour les bagues et une céramique pour les billes. En effet, les comportements des corps en contact (frottements, glissements et cisaillements notamment), qui déterminent l'usure du roulement et son échauffement, sont améliorés par rapport aux roulements traditionnels présentés ci-dessus et conduisent à une dégradation consécutive des graisses de lubrification qui est très fortement ralentie, en raison d'un moindre échauffement aux contacts, d'où une multiplication de la durée de vie entre graissages pouvant atteindre un facteur 3 environ, et simultanément une bien moindre dégradation de l'étanchéité en fonction du temps, ainsi qu'un gain de masse de l'ordre de 10 %, résultant essentiellement de la réalisation des billes en céramique, ces trois avantages concourrant à réduire très sensiblement les coûts de maintenance.

Avantageusement, la céramique des billes est au moins en partie constituée de nitrure de silicium et/ou de carbure de titane.

Dans certaines applications, la bague extérieure peut être réalisée en un acier moins performant que l'acier de la bague intérieure, et, avantageusement, les aciers des deux bagues sont choisis parmi les aciers suivants : aciers à roulements traditionnels, de préférence de type M50 ou 100C6, aciers inoxydables, de préférence de type 440C ou XD15N, aciers structuraux de nitruration ou de cémentation, de préférence 32CDV13 ou M50NIL.

On peut ainsi conserver la définition traditionnelle de la cage constituée de deux demi-cages symétriques par rapport à un plan radial d'appui d'une demi-cage contre l'autre, et chacune en forme de couronne, les demi-cages étant assemblées axialement l'une contre l'autre par des rivets axiaux entre des évidements complémentaires des demi-cages formant des logements pour les billes, et de sorte que la cage est centrée sur la bague intérieure.

Bien que la cage puisse être, comme dans les roulements à billes de l'état de la technique, en acier ou en un matériau composite, par exemple à matrice en résine synthétique du type dit « P.E.E.K » (polyether-ether-cetone) armée de fibres courtes de carbone, la cage du roulement de l'invention est avantageusement réalisée en bronze, de préférence du type US3ZFe, procurant une meilleure tenue mécanique, en particulier dans les applications sur arbres de transmission arrière d'hélicoptères.

De plus, au moins un joint d'étanchéité, mais de préférence chacun d'eux, comprend avantageusement un flasque métallique annulaire, doublé latéralement vers l'intérieur du roulement et prolongé radialement vers l'axe du roulement par un joint annulaire en un matériau élastiquement déformable, le joint d'étanchéité étant retenu par sa périphérie radiale externe contre un épaulement de la bague extérieure par un jonc, monté dans la bague extérieure et en appui contre la périphérie externe du flasque métallique, tandis que la périphérie radiale interne du joint d'étanchéité comprend une lèvre de section transversale sensiblement en forme de V du joint annulaire de matériau élastiquement déformable, ladite lèvre étant en contact élastique contre une portée radiale externe et cylindrique de la bague intérieure. Une excellente étanchéité est ainsi assurée contre les suintements du lubrifiant par les joints.

En outre, afin d'améliorer encore très sensiblement la maintenance, le flasque d'au moins un joint d'étanchéité, mais de préférence de chacun d'eux, est percé d'au moins un trou obturé par un voile du matériau élastiquement déformable du joint annulaire correspondant, et au moins une fente, non forcément débouchante, est ménagée dans ledit voile depuis l'intérieur du trou, pour faciliter l'injection de lubrifiant dans le roulement à l'aide d'une seringue dont l'aiguille est engagée dans ladite fente.

Dans un exemple préféré de réalisation, plusieurs trous équidistants en direction circonférentielle sont ménagés dans le flasque, qui est en acier, du joint d'étanchéité, une fente radiale étant ménagée dans le joint annulaire, qui est en fluorocarbone, dans chacun desdits trous axiaux du flasque.

On comprend qu'un joint d'étanchéité tel que défini ci-dessus constitue en soi une invention indépendante et représente une solution au problème posé qui peut être utilisée sur un roulement à billes indépendamment de la nature et de la structure des billes, des bagues et de la cage à billes, telles qu'elles ont été précédemment définies.

L'invention concerne également l'application d'un roulement à billes hybride selon l'invention et tel que défini ci-dessus, sur une transmission arrière pour hélicoptère, et en particulier sur une boîte de transmission arrière, telle qu'utilisée pour l'entraînement en rotation d'un rotor arrière d'hélicoptère.

D'autres avantages et caractéristiques de l'invention découleront de la description donnée ci-dessous, à titre non limitatif, d'un exemple de réalisation décrit en référence aux dessins annexés, sur lesquels :
- la figure 1 est une vue en perspective du roulement à billes,
- la figure 2 est une coupe radiale, à plus grande échelle, du roulement de la figure 1,
- la figure 3 est une coupe transversale, à plus grande échelle, des deux bagues du roulement des figures 1 et 2,
- la figure 4 est une coupe radiale, à échelle intermédiaire, de la cage du roulement des figures 1 et 2,
- la figure 5 est une vue en élévation latérale de la cage de la figure 4,
- la figure 6 est une vue en coupe d'une partie de la cage des figures 4 et 5, et
- la figure 7 est une vue en coupe transversale, à encore une autre échelle, d'un joint d'étanchéité annulaire du roulement des figures 1 et 2.

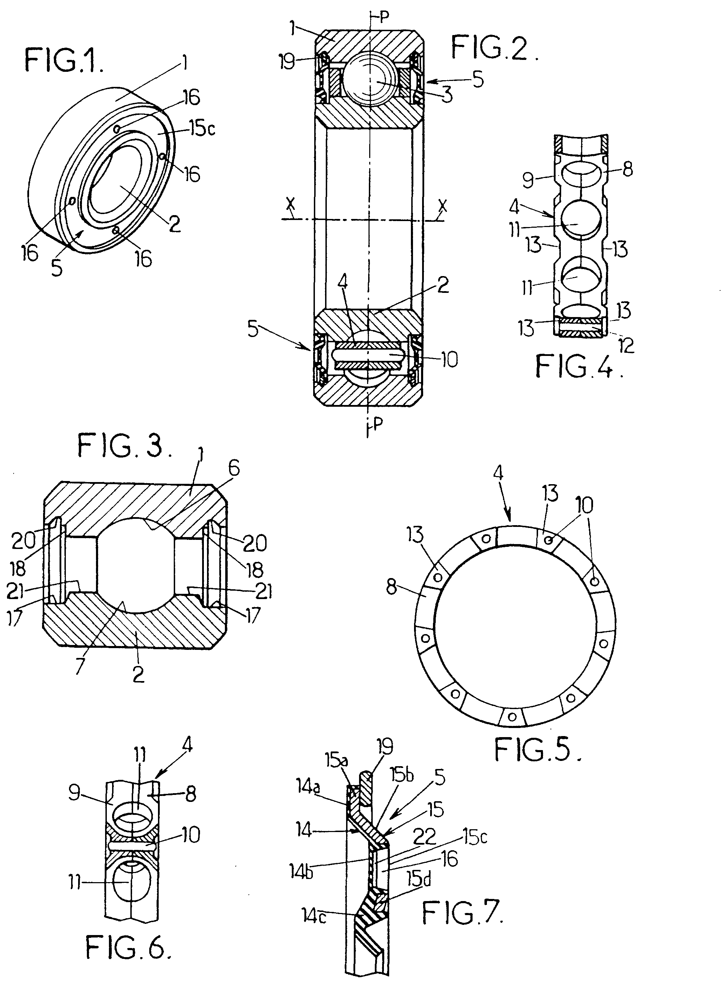

Le roulement à billes des figures 1 à 7 comprend essentiellement une bague extérieure 1, une bague intérieure 2, des billes 3, disposées entre les bagues 1 et 2 qui sont coaxiales autour de l'axe X-X du roulement, une cage 4 annulaire, également disposée entre les bagues 1 et 2, et assurant la retenue latérale et en direction circonférentielle des billes 3, et deux joints d'étanchéité 5 annulaires, qui s'étendent chacun sensiblement radialement entre les deux bagues 1 et 2, d'un côté et de l'autre respectivement de la cage 4 et des billes 3, et qui retiennent un lubrifiant (graisse ou huile) dans le volume délimité entre les deux bagues 1 et 2 et entre les deux joints d'étanchéité 5, autour de la cage 4 et des billes 3 et entre ces éléments, contenus dans ce volume.

Ce roulement à billes est du type à gorges profondes, c'est-à-dire que la bague extérieure 1 et la bague intérieure 2 présentent respectivement une gorge de roulement interne 6 et une gorge de roulement externe 7 qui sont en regard l'une de l'autre, à concavité tournée l'une vers l'autre, et symétriques par rapport au plan radial médian P-P du roulement, plan par rapport auquel l'ensemble des éléments du roulement à billes est symétrique dans cet exemple.

Les billes 3 sont disposées entre les gorges de roulement 6 et 7 et en contact radial et roulant avec ces gorges 6 et 7, dans un roulement conçu pour supporter essentiellement des efforts radiaux et peu de charge axiale.

Les billes 3 sont frittées en céramique, par exemple en Si3N4 ou TiC.

Les deux bagues 1 et 2 sont en acier, par exemple un acier à roulements traditionnels du type M50 ou 100C6, ou encore un acier inoxydable du type 440C ou XD15N, ou encore un acier structural de nitruration, tel que le 32CDV13, ou un acier structural de cémentation tel que le M50NIL.

En variante, lorsque l'acier des bagues 1 et 2 n'est pas inoxydable, chaque bague 1 ou 2 est protégée par un revêtement de surface en un alliage dense, non magnétique, extrêmement dur, à forte teneur en chrome, sous forme de dépôt électro-chimique, et plus précisément obtenu par dépôt électrolytique. Ce dépôt est de préférence réalisé à l'aide du procédé connu sous le nom de marque « Electrolizing », mis en oeuvre en France par la société Delage Electrolizing S.A. Un tel dépôt électrolytique d'alliage chromique, qui est à surface lisse, régulière et uniforme, sans porosité ni nodule, procure une protection contre la corrosion, une augmentation de la résistance à l'usure et une réduction des frottements, notamment.

Un tel revêtement dense d'alliage à base de chrome peut également être déposé par voie électrolytique sur les gorges de roulement cémentées de bagues de roulement en acier inoxydable, pour compenser, au niveau de ces gorges de roulement, la perte d'inoxydabilité résultant de la cémentation.

La cage 4 est réalisée en deux parties ou demi-cages 8 et 9, qui sont usinées en bronze, par exemple du type US3ZFe, et assemblées par des rivets axiaux 10, dans cet exemple neuf rivets pleins en Z10 à Z15 CNT18EA. Les deux demi-cages 8 et 9 sont symétriques par rapport au plan radial médian P-P du roulement, qui est le plan radial d'appui des deux demi-cages 8 et 9 l'une contre l'autre (voir figures 4 et 6). Chaque demi-cage 8 ou 9 a la forme d'une couronne présentant des évidements de forme générale hémi-cylindrique, qui sont complémentaires des évidements de même forme de l'autre demi-cage 9 ou 8, pour former des logements sensiblement cylindriques 11 d'axes radiaux et régulièrement répartis en direction circonférentielle sur la cage 4, de sorte que chacun des neuf logements 11 dans cet exemple loge l'une des neuf billes 3. Chacun des rivets axiaux 10, qui assemblent axialement les demi-cages 8 et 9 l'une contre l'autre, traverse un alésage axial 12 percé dans une partie de la cage 4 qui est située entre deux logements 11 voisins et entre deux lamages 13 usinés dans les faces latérales des demi-cages 8 et 9 qui sont tournées axialement vers l'extérieur du roulement, pour diminuer la masse de la cage 4, qui est montée centrée sur la bague intérieure 2.

Chaque joint d'étanchéité 5 comprend un joint annulaire 14, s'étendant sensiblement radialement, en un matériau élastiquement déformable, dans cet exemple du fluorocarbone, qui est moulé sur une armature métallique constituée d'un flasque annulaire 15. Comme représenté sur la figure 7, le flasque annulaire 15 comporte une partie périphérique externe 15a qui est radiale et prolongée vers l'axe X-X du roulement par une partie tronconique 15b convergent latéralement vers l'extérieur du roulement, qui se prolonge elle-même vers l'axe X-X par une partie radiale 15c se terminant par une partie périphérique interne 15d sensiblement tronconique convergent latéralement vers l'intérieur du roulement. De plus, quatre trous 16 cylindriques de section circulaire, équidistants en direction circonférentielle autour de l'axe X-X, sont ménagés axialement dans la partie centrale radiale 15c du flasque 15 en acier (voir figure 1).

Le joint annulaire 14 de fluorocarbone est moulé sur le flasque d'armature 15 de sorte à doubler le flasque 15 dans toutes ses parties vers l'intérieur du roulement, par un mince film de fluorocarbone, qui recouvre également le bord radial externe de la partie périphérique externe 15a. Le fluorocarbone du joint annulaire 14 recouvre également la paroi de chaque trou 16 et en obture le fond, vers l'intérieur du roulement, par un voile 14b. La partie périphérique interne 15d du flasque 15 est par contre noyée dans une masse de fluorocarbone qui constitue la périphérie radiale interne du joint annulaire 14 et du joint d'étanchéité 5, et qui est conformée en une lèvre 14c de section transversale sensiblement en forme de V ouvert latéralement vers l'extérieur du roulement. Cette lèvre en V 14c vient en contact élastique contre une portée 17 latérale externe et cylindrique de la bague intérieure 2 (voir figure 3) lorsque le joint d'étanchéité 5 est retenu par la partie périphérique radiale externe 15a du flasque 15 et par le film 14a du joint annulaire 14 de fluorocarbone qui la double latéralement vers l'intérieur, contre un épaulement radial et latéral 18 de la bague extérieure 1, par un jonc 19 métallique, par exemple en Z 10 CN 18-8, lequel jonc 19 est monté et retenu dans une gorge 20 s'ouvrant radialement vers l'intérieur et ménagée dans la périphérie radiale interne de l'extrémité latérale correspondante de la bague intérieure 1 (latéralement à l'extérieur de l'épaulement 18).

Les deux joints d'étanchéité 5 sont montés symétriquement l'un de l'autre par rapport au plan radial P-P, en étant fixés de manière étanche par leur périphérie radiale externe contre les épaulements 18 de la bague extérieure 1, à l'aide des joncs 19, et en contact étanche par leur lèvre en V 14c contre les portées cylindriques 17 de la bague intérieure 2, de part et d'autre de portées cylindriques 21, entre lesquelles est ménagée la gorge de roulement 7, et sur lesquelles est centrée la cage 4. Une excellente étanchéité est ainsi assurée contre les pertes de lubrifiant par suintement. Toutefois, pour compenser d'éventuelles pertes de lubrifiant, une fente 22 est ménagée dans le voile 14b du joint annulaire de fluorocarbone 14 qui obture chaque trou 16 dans le flasque 15, et ceci depuis l'intérieur du trou 16. Cette fente 22 est de préférence orientée radialement et n'est pas forcément débouchante au travers du voile 14b. A l'aide d'une seringue contenant du lubrifiant, il est possible d'engager l'aiguille de la seringue entre les bords de la fente 22, éventuellement de perforer le fond de cette fente et traverser le voile 14b avec l'aiguille, pour injecter à l'aide de la seringue du lubrifiant dans le roulement, puis retirer l'aiguille du voile 14b et de la fente 22, qui se referme élastiquement de sorte à empêcher toute fuite de lubrifiant vers l'extérieur du roulement, par la fente 22 et le trou 16

On peut ainsi réalimenter le roulement en graisse ou lubrifiant sans provoquer de déchirement ni de dégradation du joint annulaire 14 des joints d'étanchéité 5.

Un roulement à billes selon l'invention se prête avantageusement à une utilisation sur une transmission arrière d'hélicoptère, et en particulier sur une boîte de transmission arrière, pour l'entraînement du rotor arrière d'un hélicoptère. Dans cette application, un tel roulement à billes permet d'obtenir 1200 heures de fonctionnement suivant un cycle opérationnel de l'hélicoptère et sans regraissage. La durée de vie entre graissages est donc multipliée d'un facteur de l'ordre de 3, par rapport à des roulements traditionnels, et en outre les regraissages sont facilités par les fentes 22 dans les voiles de fluorocarbone 14b qui obturent des trous 16 des flasques d'armature 15 des joints d'étanchéité 5.

Il en résulte des coûts de maintenance considérablement réduits.

Il convient de noter que la cage 4, de préférence en bronze dans ce roulement, peut également être en acier ou en composite, par exemple à fibres courtes de carbone noyées dans une résine synthétique de type P.E.E.K. (polyether-ether-cetone), comme connu dans l'état de la technique.

On note qu'un joint d'étanchéité tel que 5 peut équiper un roulement à billes dont les billes et/ou les bagues et/ou la cage peuvent être d'une structure et/ou d'une nature différente(s) de celle(s) décrite(s) ci-dessus, et que ce joint constitue en soi une invention indépendante applicable sur des roulements à billes de l'état de la technique.

## Revendications

1. Roulement à billes, du type à gorges profondes, comprenant une bague intérieure (2) et une bague extérieure (1) qui sont en acier et présentent chacune l'une de deux gorges de roulement (6, 7) en regard l'une de l'autre, des billes (3) frittées en céramique, et disposées entre et en contact avec les gorges de roulement (6, 7) des bagues (1, 2), et une cage (4) à billes disposée entre les bagues (1, 2) et retenant les billes (3), deux joints d'étanchéité (5) annulaires s'étendant sensiblement radialement entre les deux bagues (1, 2), de part et d'autre des billes (3) et de la cage (4), pour retenir un lubrifiant dans le volume contenant les billes (3) et la cage (4) et délimité entre les deux bagues (1, 2) et les deux joints d'étanchéité (5),
**caractérisé en ce que** les billes (3) sont en contact avec un revêtement de surface en un alliage dense à forte teneur en chrome réalisé par dépôt électrolytique, protégeant l'une au moins des bagues (1, 2) en acier, au moins sur sa gorge de roulement (6, 7).

2. Roulement à billes selon la revendication 1, **caractérisé en ce que** la céramique des billes (3) est au moins en partie constituée de Si3N4 ou de TiC.

3. Roulement à billes selon l'une des revendications 1 et 2, **caractérisé en ce que** l'acier de la bague intérieure (2) et l'acier de la bague extérieure (1) sont choisis parmi les aciers suivants : aciers à roulements traditionnels, de préférence de type M50 ou 10CC6, aciers inoxydables, de préférence de type 440C ou XD15N, aciers structuraux de nitruration ou de cémentation, de préférence 32CDV13 ou M50NlL.

4. Roulement à billes selon l'une quelconque des revendications 1 à 3, **caractérisé en ce que** la cage (4) est constituée de deux demi-cages (8, 9) symétriques par rapport à un plan radial (P-P) d'appui d'une demi-cage contre l'autre, et chacune en forme de couronne, les demi-cages (8, 9) étant assemblées axialement l'une contre l'autre, par des rivets (10) axiaux entre des évidements complémentaires des demi-cages (8, 9) formant des logements (11) pour les billes (3), et de sorte que la cage (4) est centrée sur la bague intérieure (2).

5. Roulement à billes selon la revendication 4, **caractérisé en ce que** la cage (4) est réalisée en bronze, de préférence du type US3ZFe.

6. Roulement à billes selon l'une quelconque des revendications 1 à 5, **caractérisé en ce qu'**au moins un joint d'étanchéité (5) comprend un flasque métallique annulaire (15), doublé latéralement vers l'intérieur du roulement et prolongé radialement vers l'axe (X-X) du roulement par un joint annulaire (14) en un matériau élastiquement déformable, le joint d'étanchéité (5) étant retenu par sa périphérie radiale externe (15a, 14a) contre un épaulement (18) de la bague extérieure (1) par un jonc (19), monté dans la bague extérieure (1) et en appui contre la périphérie externe (15a) du flasque métallique (15), tandis que la périphérie radiale interne du joint d'étanchéité (5) comprend une lèvre (14c) de section transversale sensiblement en forme de V du joint annulaire (14) de matériau élastiquement déformable, ladite lèvre (14c) étant en contact élastique contre une portée (17) latérale externe et cylindrique de la bague intérieure (2).

7. Roulement à billes selon la revendication 6, **caractérisé en ce que** le flasque (15) d'au moins un joint d'étanchéité (5) est percé d'au moins un trou (16) obturé par un voile (14b) du matériau élastiquement déformable du joint annulaire (14) correspondant, et au moins une fente (22), non forcément débouchante, est ménagée dans ledit voile (14b) depuis l'intérieur du trou (16), pour faciliter l'injection de lubrifiant dans le roulement à l'aide d'une seringue dont l'aiguille est engagée dans ladite fente (22).

8. Roulement à billes selon la revendication 7, **caractérisé en ce que** plusieurs trous (16) équidistants en direction circonférentielle sont ménagés axialement dans ledit flasque (15) en acier du joint d'étanchéité (5), une fente (22) radiale étant ménagée dans le joint annulaire (14) en fluorocarbone, dans chacun desdits trous (16) du flasque (14).

9. Application d'un roulement à billes selon l'une quelconque des revendications 1 à 8 sur une transmission arrière pour hélicoptère, en particulier sur une boite de transmission arrière.

## Patentansprüche

1. Kugellager mit tiefen Laufrillen, mit einem Innenring (2) und einem Außenring (1), die aus Stahl bestehen und jeweils eine von zwei Laufrillen (6, 7) aufweisen, die zueinander hin weisen, wobei aus Keramik gesinterte Kugeln (3) zwi schen den Laufrillen (6, 7) der Ringe (1, 2) und in Kontakt damit angeordnet sind, und wobei ein Kugelkäfig (4) zwischen den Ringen (1, 2) vorgesehen ist und die Kugeln (3) zurückhält, und wobei zwei Ringdichtungen (5) sich im Wesentlichen radial zwischen den beiden Ringen (1, 2) auf beiden Seiten der Kugeln (3) und des Käfigs (4) erstrecken, um ein Schmiermittel in dem Volumen zurückzuhalten, das die Kugeln (3) und den Käfig (4) begrenzt und das zwischen den beiden Ringen (1, 2) und den beiden Dichtungen (5) beschränkt ist,
**dadurch gekennzeichnet, dass** die Kugeln (3) in Kontakt mit einer Beschichtung der Oberfläche aus einer dichten Legierung mit hohem Chromgehalt stehen, die durch elektrolytische Abscheidung realisiert ist und zumindest einen der beiden Ringe (1, 2) aus Stahl schützt, und zwar zumindest an seiner Laufrille (6, 7).

2. Kugellager nach Anspruch 1, **dadurch gekennzeichnet, dass** die Keramik der Kugeln (3) zumindest teilweise aus Si3N4 oder TiC besteht.

3. Kugellager nach einem der Ansprüche 1 und 2, **dadurch gekennzeichnet, dass** der Stahl des Innenrings (2) und der Stahl des Außenrings (1) aus den folgenden Stählen ausgewählt sind: traditionelle Wälzlagerstähle, vorzugsweise M50 oder 100C6, rostfreie Stähle, vorzugsweise 440C oder XD15N, nitrierte oder aufgekohlte Strukturstähle, vorzugsweise 32CDV13 oder M50NIL.

4. Kugellager nach einem der Ansprüche 1 bis 3, **dadurch gekennzeichnet, dass** der Käfig (4) aus zwei halben Käfigen (8, 9) besteht, die symmetrisch bezüglich einer radialen Anstoß-Ebene (P-P) eines halben Käfigs gegen den anderen symmetrisch sind und die jeweils die Form einer Krone haben, wobei die beiden halben Käfige (8, 9) axial gegeneinander zusammengefügt sind, und zwar durch axiale Nieten (10) zwischen komplementären Ausnehmungen der halben Käfige (8, 9), die Sitze (11) für die Kugeln (3) bilden, so dass der Käfig (4) an dem Innenring (2) zentriert ist.

5. Kugellager nach Anspruch 4, **dadurch gekennzeichnet, dass** der Käfig (4) aus Bronze gemacht ist, vorzugsweise aus US3ZFe.

6. Kugellager nach einem der Ansprüche 1 bis 5, **dadurch gekennzeichnet, dass** zumindest eine Dichtung (5) ein metallisches, ringförmiges Schild (15) aufweist, das seitlich in Richtung des Inneren des Lagers verdoppelt und in Richtung der Achse (X-X) des Lagers radial durch einen Ring (14) aus einem elastisch verformbaren Material verlängert ist, wobei die Dichtung (5) an ihrem radialen äußeren Außenumfang (15a, 14a) gegen eine Schulter (18) des Außenrings (1) durch einen Sprengring (19) zurückgehalten ist, der in dem Außenring (1) montiert ist und gegen den Außenumfang (15a) des metallischen Schildes (15) anliegt, während der radiale innere Umfang der Dichtung (5) eine Lippe (14c) des Rings (14) aus dem elastisch verformbaren Material mit einem im Wesentlichen V-förmigen Querschnitt aufweist, welche Lippe (14c) in elastischem Kontakt mit einer seitlichen äußeren und zylindrischen Auflage (17) des Innenrings (2) steht.

7. Kugellager nach Anspruch 6, **dadurch gekennzeichnet, dass** das Schild (15) von zumindest einer Dichtung (5) zumindest eine Durchgangsöffnung (16) aufweist, die durch einen Flügel (14b) des elastisch verformbaren Materials des jeweiligen Rings (14) verdeckt ist, und dass zumindest eine Kerbe (22), nicht zwingend einmündend, in diesem Flügel (14b) vom Inneren der Öffnung (16) her ausgebildet ist, um das Einspritzen des Schmiermittels in das Lager hinein mit Hilfe einer Spritze zu erleichtern, deren Nadel in dieser Kerbe (22) im Eingriff ist.

8. Kugellager nach Anspruch 7, **dadurch gekennzeichnet, dass** mehrere Öffnungen (16) mit gleichem Abstand in Umfangsrichtung axial in dem Schild (15) aus Stahl der Dichtung (5) ausgestaltet sind, und dass eine radiale Kerbe (22) in dem Ring (14) aus Fluorcarbon ausgebildet ist, und zwar in jeder der besagten Öffnungen (16) des Schildes (15).

9. Verwendung eines Kugellagers nach einem der Ansprüche 1 bis 8 an einem hinteren Getriebe für einen Helikopter, insbesondere an einem hinteren Getriebekasten.

## Claims

1. A ball bearing of the deep groove type, comprising an inner ring (2) and an outer ring (1) which are made of steel and each of which exhibits one of two raceway grooves (6, 7) facing each other, balls (3), which are sintered and made of ceramic, arranged between and in contact with the raceway grooves (6, 7) of the rings (1, 2), and a ball cage (4) arranged between the rings (1, 2) and retaining the balls (3), two annular seals (5) extending substantially radially between the two rings (1, 2) on each side of the balls (3) and of the cage (4) to retain a lubricant in the volume containing the balls (3) and the cage (4) and delimited between the two rings (1, 2) and the two seals (5),
**characterized in that** the balls (3) are in contact with a surface coating made of a dense alloy with a high chromium content produced by electrolytic deposition, protecting at least one of the steel rings (1, 2), at least on its raceway groove (6, 7).

2. The ball bearing as claimed in claim 1, **characterized in that** the ceramic of the balls (3) consists at least partly of Si₃N₄ or TiC.

3. The ball bearing as claimed in one of claims 1 and 2, **characterized in that** the steel of the inner ring (2) and the steel of the outer ring (1) are chosen from the following steels: conventional bearing steels, preferably of type M50 or 100C6, stainless steels, preferably of type 440C or XD15N, structural nitriding or case-hardening steels, preferably 32CDV13 or M50NIL.

4. The ball bearing as claimed in any of claims 1 to 3, **characterized in that** the cage (4) consists of two half-cages (8, 9) which are symmetric with respect to a radial plane (P-P) along which one half-cage bears against the other, and in the form of a crown, the half-cages (8, 9) being assembled axially against one another by axial rivets (10) between complementary recesses of the half-cages (8, 9) forming housings (11) for the balls (3) and in such a way that the cage (4) is centered on the inner ring (2).

5. The ball bearing as claimed in claim 4, **characterized in that** the cage (4) is made of bronze, preferably of type US3ZFe.

6. The ball bearing as claimed in any of claims 1 to 5, **characterized in that** at least one seal (5) comprises an annular metal flange (15) lined laterally toward the inside of the bearing and extended radially toward the axis (X-X) of the bearing by an annular seal (14) made of an elastically deformable material, the seal (5) being retained by its external radial periphery (15a, 14a) against a shoulder (18) of the outer ring (1 ) by a snapring (19) mounted in the outer ring (1) and bearing against the external periphery (15a) of the metal flange (15), while the internal radial periphery of the seal (5) comprises a lip (14c) of substantially V-shaped cross section of the annular seal (14) of elastically deformable material, said lip (14c) being in elastic contact against an external and cylindrical lateral bearing surface (17) of the inner ring (2).

7. The ball bearing as claimed in claim 6, **characterized in that** the flange (15) of at least one seal (5) is pierced with at least one hole (16) closed off by a web (14b) of the elastically deformable material of the corresponding annular seal (14), and at least one slot (22), not necessarily open, is formed in said web (14b) from inside the hole (16), to make it easier to inject lubricant into the rolling bearing using a syringe, the needle of which is engaged in said slot (22).

8. The ball bearing as claimed in claim 7, **characterized in that** several holes (16) which are equidistant in the circumferential direction are formed axially in said steel flange (15) of the seal (5), a radial slot (22) being formed in the fluorocarbon annular seal (14) in each of said holes (16) of the flange (14).

9. An application of a ball bearing as claimed in any of claims 1 to 8 to a tail transmission for a helicopter, particularly to a tail gearbox.
